# EUROPEAN PATENT SPECIFICATION

(11) **EP 2 846 459 B1**
(45) Date of publication and mention of the grant of the patent: **14.07.2021**
(21) Application number: 14183428.3
(22) Date of filing: 03.09.2014
(51) Int. Cl.: H02S 20/23, H02S 20/25, H02S 40/42

(54) **Improved roof covering element**
Verbessertes Dacheindeckungselement
Elément de couverture de toit amélioré

(30) Priority: 04.09.2013 NL 2011377
(43) Date of publication of application: 11.03.2015
(73) Proprietor: Karsten, Jacob, 7461 DR Rijssen (NL)
(72) Inventor: Karsten, Jacob, 7461 DR Rijssen (NL)
(74) Representative: Mink-Lindenburg, Charlotte Hildegard

(56) References cited:
- WO-A1-2009/114905
- WO-A1-2011/096810
- DE-A1-102011 107 671
- DE-U1-202009 010 235
- JP-A- H1 062 017
- None

## Description

The invention relates to a roof covering element according to the preamble of claim 1.

The roof covering element according to the preamble is known in the field and is described in the International patent application WO 2009/114905 A1. The heat-absorbing elements are referred to in the field as absorbers.

The solar panel in the known roof covering element has the advantage that the solar panel is cooled during operation, whereby the performance of the photovoltaic cells increases. The cooling takes place by discharging heat or by supplying cooled liquid in the heat-absorbing elements. The discharged heat can also be usefully employed for different purposes. In addition, the known solar panel has the advantage that the upper side of the cover layer lies at more or less the same level as the upper side of the roof covering elements, and the edges of the cover layer co-act with the edges of the adjacent roof covering elements. The known solar panel is hereby integrated into the existing roof and does not lie on the roof.

The solar panel in the known roof covering element has the drawback that the weight and the thickness of the solar panel are mainly determined by the heat-discharging layer. This is due particularly to the heat-absorbing element, which comprises a pipe system through which liquid flows in order to discharge the absorbed heat.

The International application WO 2011/096810 A1 describes a liquid cooled solar panel, wherein the weight as been reduced by reducing the thickness of the front and back glass panels and adding strengthening ribs on the back glass panel.

It is the object of the invention to provide a roof covering element according to the preamble of claim 1 with an improved heat-absorbing element which can take a thin and light form but which can nevertheless discharge the heat efficiently. Owing to the use of a thin heat-absorbing element the size of the solar panel does not depend on the weight thereof. The solar panel is referred to by applicant as "CollectorPan".

The invention provides for this purpose a roof covering element according to the preamble of claim 1 in which each heat-absorbing element comprises a first and second panel disposed some distance from each other and wherein a liquid-tight space is formed between the first and second panels, which space comprises channels through which liquid flows during use of the solar panel for the purpose of absorbing the heat absorbed by the first panel, and recesses are arranged in the second panel, wherein the first panel is connected to the second panel at the position of the recesses and wherein each channel lies between successive recesses, the width of each channel is greater than the height thereof, the width of each recess is smaller than the width of each of the channels and the channels run substantially parallel to each other, and wherein the channels are mutually connected in harp configuration. First outer ends of each channel are in liquid communication and second outer ends of each channel are in liquid communication. The harp configuration can also be referred to in the field as ladder configuration.

The heat-absorbing element can hereby remain thin and the heat absorbed by the heat-absorbing element can be relinquished directly to the liquid, and the liquid can be guided over substantially the whole surface of the first panel. Each recess is arranged as a deformation or a protrusion in the second panel using known deforming techniques. The width of each channel is greater here than the height thereof. The height of the channel is determined by the distance between the first and the second panel. By opting for a width of each channel which is greater than the height thereof there is a sufficient contact area between the first panel and the liquid for efficient transfer of the heat absorbed by the first panel to the liquid. The channels run substantially parallel relative to each other and the channels are mutually connected in harp configuration. The recesses hereby run parallel, whereby the second panel with recesses is easy to produce using standard deforming techniques. Another advantage of the stated technical measures is that because of the parallel channels the heat-absorbing element can be curved into a determined shape.

According to the invention the first and/or second panel is manufactured from aluminium. Aluminium is cheaper than other metals and has good heat-conducting properties. In addition, aluminium is suitable for different shaping techniques.

In a first preferred embodiment of the roof covering elementaccording to the invention the upper side of the cover layer takes the form, preferably in its entirety, of the roof covering elements to be replaced. The solar panel hereby takes on the function of the removed roof covering elements, and the solar panel forms a visual whole with the roof covering elements which have not been removed.

The space between the cover layer and the first photovoltaic layer is preferably airtight, and this space filled with a dry gas. Condensation is hereby prevented from occurring in this space.

In an alternative embodiment of the inventive roof covering element, the solar panel is provided with a second photovoltaic layer which is configured to convert infrared light to electricity and which is arranged on the first photovoltaic layer. The second photovoltaic layer is transparent.

In all embodiments of the inventive roof covering element one or more mirrors are preferably placed between the cover layer and the first photovoltaic layer and close to the edges of the first photovoltaic layer such that incident light reflects to the first photovoltaic layer. More light will hereby be incident upon the first photovoltaic layer during use of the solar panel.

The invention will be further elucidated with reference to the following figures, in which:
Figure 1 shows a top view of the preferred embodiment of the solar panel according to the invention;
Figure 2 shows the preferred embodiment of the solar panel according to the invention which has been arranged on a roof, wherein a number of roof covering elements have been replaced by the solar panel;
Figure 3 shows a cross-section of the preferred embodiment of the solar panel according to the invention.

The same components are designated in the figures with the same reference numerals.

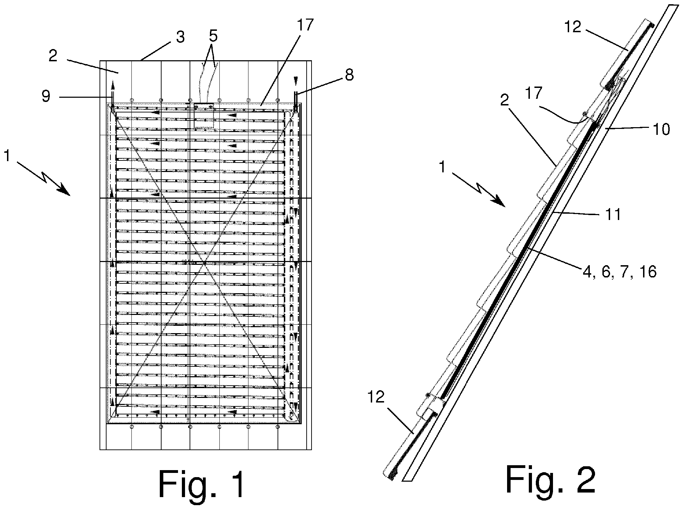

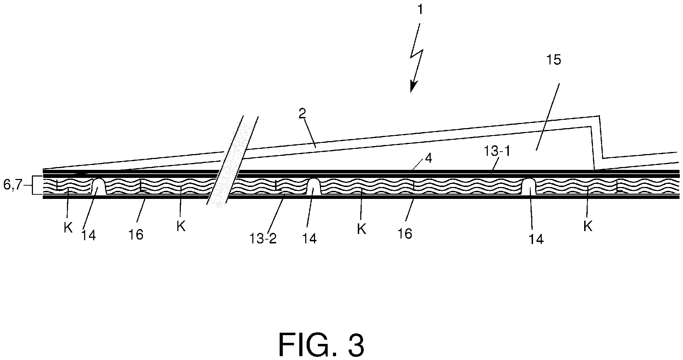

Figure 1 shows a top view of the preferred embodiment of solar panel 1 according to the invention. The liquid-cooled solar panel 1 is intended for placing on a roof, wherein the roof comprises a roofing board covered with roof covering elements. Panel 1 replaces here some of the roof covering elements that are present. Panel 1 comprises a transparent cover layer 2, wherein edges 3 of cover layer 2 are formed such that the edges co-act with adjacent roof covering elements during operation. Under cover layer 2 there is a first photovoltaic layer 4 which is provided with photovoltaic cells. The current generated by the photovoltaic cells can be discharged through electrical wiring 5. Arranged under the first photovoltaic layer 4 is a heat-discharging layer 6, wherein the heat-discharging layer is provided with a heat-absorbing element 7 through which liquid which discharges the heat absorbed by the heat-absorbing element 7 flows during operation. Heat-absorbing element 7 is referred to in the field as an absorber. The liquid can be supplied and discharged via supply connection 8 and discharge connection 9. A heat-insulating layer 16 is arranged under heat-discharging layer 6. A reflective side wall is placed between the cover layer and the edges of the first photovoltaic layer such that light incident on the side wall reflects to the photovoltaic layer. Layers 4, 6, 7 and 16 are shown in figures 2 and 3.

Figure 2 shows the preferred embodiment of solar panel 1 according to the invention arranged on a roof 10, wherein a number of roof covering elements 12 have been replaced by solar panel 1. Roof 10 comprises a roofing board 11 covered with roof covering elements 12. Solar panel 1 lies on roofing board 11 so that solar panel 1 is easy to install. A roof tile is shown by way of illustration. This can however be any roof covering element, such as for instance a corrugated sheet. The upper side of cover layer 2 has the same form as the replaced roof covering elements 12. Layers 4, 6 and 7 of solar panel 1 are drawn assembled.

Figure 3 shows a cross-section of the preferred embodiment of solar panel 1 according to the invention. Panel 1 comprises a (highly) transparent cover layer 2. Below cover layer 2 is a first photovoltaic layer 4 which is provided with photovoltaic cells (not drawn). Arranged under the first photovoltaic layer 4 is a heat-discharging layer 6 which is formed by absorber 7. Absorber 7 comprises substantially two panels 13-1, 13-2 disposed some distance from each other. Formed between panels 13-1, 13-2 is a liquid-tight space which comprises a plurality of channels K. During use of solar panel 1 liquid L flows through the channels K for the purpose of absorbing the heat absorbed by first panel 13-1. Recesses 14 are arranged in second panel 13-2. First panel 13-1 is connected to second panel 13-2 at the position of recesses 14. Each channel K lies between successive recesses 14. The width of each channel K is greater than the height thereof and the width of each recess 14 is smaller than the width of each of the channels K. A heat-insulating layer 16 is arranged behind heat-discharging layer 6. Owing to said technical measures solar panel 1 can take a thin and light form. The combination of the first photovoltaic layer 4, heat-discharging layer 6 and heat-insulating layer 16 is referred to by applicant as "Collectorcel".

The channels K run substantially parallel relative to each other, wherein channels K are mutually connected in harp configuration. Compared to a continuous S-configuration, a lower liquid pressure can be used in a harp configuration and less liquid need flow through a channel. The cross-sectional area of the channel can hereby remain limited. The first and/or second panel is manufactured from aluminium. Aluminium has a somewhat lower heat conduction coefficient than copper, but is conversely cheaper and lighter.

Space 15 between cover layer 2 and the first photovoltaic layer 4 is airtight and filled with a dry gas.

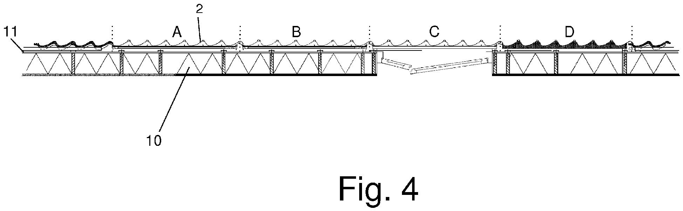

Figure 4 shows a transverse view of the roof covering system according to the invention. The inventive roof covering system comprises the following roof covering elements:
Roof covering element A: Liquid-cooled solar panel according to the invention.
Roof covering element B: Solar collector provided with the same cover plate as Roof covering element A.
Roof covering element C: Window provided with a frame comprising the same cover plate as Roof covering element A.
Roof covering element D: Fitting piece provided with the same cover plate as Roof covering element A.

A complete roof can be provided with the inventive roof covering elements using the roof covering system according to the invention.

The general inventive concept of the invention is to create a thin and light solar panel with a high yield, which can be integrated into an existing or new roof and which is also easy and inexpensive to produce. It is crucial here for the liquid in the heat-absorbing element to be in direct contact with the first panel and for the liquid to be guided over the largest possible surface area of the first panel. The known solar panel cannot be given a thin and light form at every size, since the thickness of the first and second panels depends on the size of the heat-absorbing element. The yield of the known solar panel is limited by an insufficient heat transfer.

In the above description heat-discharging layer is also understood to mean cooling supply layer. In the case of a heat-discharging layer the liquid flowing through the absorber will absorb heat from the first panel and in the case of a cooling supply layer the liquid flowing through the absorber will relinquish coolness to the first panel.

The possible uses of the inventive solar panel are shown in the Netherlands patent 1039010 of the same applicant.

The invention is therefore not limited to the described and shown preferred embodiments but extends to any embodiment falling within the scope of protection as defined in the claims and as seen in the light of the foregoing description and accompanying drawings.

## Claims

1. Roof covering element comprising a liquid-cooled solar panel (1),
comprising a first photovoltaic layer (4) which is provided with photovoltaic cells, a heat-discharging layer (6) lying against the rear side of the first photovoltaic layer (4), wherein the heat-discharging layer (6) is provided with one or more heat-absorbing elements (7) through which liquid which discharges heat absorbed by the heat-absorbing elements (7) flows during operation,
a heat-insulating layer (16) arranged against the heat-discharging layer (6), and a transparent cover layer (2) arranged on the first photovoltaic layer (4) at some distance therefrom, wherein the edges (3) of the cover layer (2) are formed such that the edges (3) co-act with adjacent roof covering elements when the upper side of the cover layer (2) replaces a number of covering elements (12) of a roof,
wherein each heat-absorbing element (7) comprises a first and second panel (13-1, 13-2) disposed some distance from each other, and wherein the first and/or second panel (13-2) is manufactured from aluminium,
**characterized in that** a liquid-tight space is formed between the first and second panels of each heat-absorbing element (7), which space comprises channels (K) through which liquid flows during use of the solar panel (1) for the purpose of absorbing the heat absorbed by the first panel (13-1), and recesses (14) are arranged in the second panel (13-2), wherein the first panel (13-1) is connected to the second panel (13-2) at the position of the recesses (14) and wherein each channel (K) lies between successive recesses (14), the width of each channel (K) is greater than the height thereof, the width of each recess (14) is smaller than the width of each of the channels (K) and the channels (K) run substantially parallel to each other, and wherein the channels (K) are mutually connected in harp configuration.

2. Roof covering element as claimed in claim 1, **characterized in that** the upper side of the cover layer (2) takes the form of the roof covering elements to be replaced (12).

3. Roof covering element as claimed in any of the foregoing claims, **characterized in that** the space between the cover layer (2) and the first photovoltaic layer (4) is airtight and filled with a dry gas.

4. Roof covering element as claimed in any of the foregoing claims, **characterized in that** the solar panel (1) is provided with a second photovoltaic layer which is configured to convert infrared light to electricity and which is arranged on the first photovoltaic layer (4).

5. Roof covering element as claimed in any of the foregoing claims, **characterized in that** one or more mirrors (17) are placed between the cover layer (2) and the first photovoltaic layer (4) and close to the edges of the first photovoltaic layer (4) such that incident light reflects to the first photovoltaic layer (4).

## Patentansprüche

1. Dacheindeckungselement umfassend ein flüssigkeitsgekühltes Solarpanel (1), umfassend eine erste photovoltaische Schicht (4), die mit photovoltaischen Zellen versehen ist, eine an der Rückseite der ersten photovoltaischen Schicht (4) anliegende wärmeabgebende Schicht (6), wobei die wärmeabgebende Schicht (6) mit einem oder mehreren wärmeabsorbierenden Elementen (7) versehen ist, durch die im Betrieb Flüssigkeit fließt, die von den wärmeabsorbierenden Elementen (7) absorbierte Wärme abführt, eine wärmeisolierende Schicht (16), die gegen die wärmeabgebende Schicht (6) angeordnet ist, und eine transparente Deckschicht (2), die auf der ersten photovoltaischen Schicht (4) in einigem Abstand davon angeordnet ist, wobei die Ränder (3) der Deckschicht (2) so ausgebildet sind, dass die Ränder (3) mit benachbarten Dacheindeckungselementen zusammenwirken, wenn die Oberseite der Deckschicht (2) eine Anzahl von Eindeckungselementen (12) eines Daches ersetzt, wobei jedes wärmeabsorbierende Element (7) eine erste und eine zweite Platte (13-1 , 13-2) umfasst, die in einem gewissen Abstand voneinander angeordnet sind, und wobei die erste und/oder zweite Platte (13-2) aus Aluminium hergestellt ist, **dadurch gekennzeichnet, dass** ein flüssigkeitsdichter Raum zwischen dem ersten und dem zweiten Panel jedes wärmeabsorbierenden Elements (7) gebildet ist, wobei der Raum Kanäle (K) umfasst, durch die während der Verwendung des Solarpanels (1) Flüssigkeit fließt, um die von dem ersten Panel (13-1) absorbierte Wärme zu absorbieren, und in dem zweiten Panel (13-2) Aussparungen (14) angeordnet sind, wobei das erste Panel (13-1) mit dem zweiten Panel (13-2) an der Position der Ausnehmungen (14) verbunden ist und wobei jeder Kanal (K) zwischen aufeinanderfolgenden Aussparungen (14) liegt, die Breite jedes Kanals (K) größer als dessen Höhe ist, die Breite jeder Ausnehmung (14) kleiner als die Breite jedes der Kanäle (K) ist und die Kanäle (K) im Wesentlichen parallel zueinander verlaufen, und wobei die Kanäle (K) in Harfenkonfiguration miteinander verbunden sind.

2. Dacheindeckungselement nach Anspruch 1, **dadurch gekennzeichnet, dass** die Oberseite der Deckschicht (2) die Form der auszutauschenden Dacheindeckungselemente (12) aufweist.

3. Dacheindeckungselement nach einem der vorhergehenden Ansprüche, **dadurch gekennzeichnet, dass** der Raum zwischen der Deckschicht (2) und der ersten photovoltaischen Schicht (4) luftdicht ist und mit einem trockenen Gas gefüllt ist.

4. Dacheindeckungselement nach einem der vorhergehenden Ansprüche, **dadurch gekennzeichnet, dass** das Solarpanel (1) mit einer zweiten photovoltaischen Schicht versehen ist, die zur Umwandlung von Infrarotlicht in Elektrizität ausgebildet ist und die auf der ersten photovoltaischen Schicht (4) angeordnet ist.

5. Dachabdeckungselement nach einem der vorangehenden Ansprüche, **dadurch gekennzeichnet, dass** ein oder mehrere Spiegel (17) zwischen der Deckschicht (2) und der ersten photovoltaischen Schicht (4) und in der Nähe der Ränder der ersten photovoltaischen Schicht (4) angeordnet sind, sodass einfallendes Licht auf die erste photovoltaische Schicht (4) reflektiert wird.

## Revendications

1. Élément de couverture de toit comprenant un panneau solaire refroidi par un liquide (1), comprenant une première couche photovoltaïque (4) qui est munie de cellules photovoltaïques, une couche de dissipation de la chaleur (6) reposant contre la face arrière de la première couche photovoltaïque (4), la couche de dissipation de la chaleur (6) étant munie d'un ou plusieurs éléments absorbant la chaleur (7) à travers lesquels circule un liquide qui dissipe la chaleur absorbée par les éléments absorbant la chaleur (7) pendant le fonctionnement,
une couche d'isolation thermique (16) disposée contre la couche de dissipation de la chaleur (6), et une couche de couverture transparente (2) disposée sur la première couche photovoltaïque (4) à une certaine distance de celle-ci, les bords (3) de la couche de couverture (2) étant formés de telle sorte que les bords (3) coopèrent avec des éléments de couverture de toit adjacents lorsque la face supérieure de la couche de couverture (2) remplace un certain nombre d'éléments de couverture (12) d'un toit, chaque élément absorbant la chaleur (7) comprenant un premier et un second panneau (13-1, 13-2) disposés à une certaine distance l'un de l'autre, et le premier et/ou le second panneau (13-2) étant fabriqué en aluminium,
**caractérisé en ce que**
un espace étanche aux liquides est formé entre le premier et le second panneau de chaque élément absorbant la chaleur (7),
lequel espace comprend des canaux (K) à travers lesquels circule le liquide pendant l'utilisation du panneau solaire (1) dans le but d'absorber la chaleur absorbée par le premier panneau (13-1), et des évidements (14) sont prévus dans le second panneau (13-2), le premier panneau (13-1) étant relié au second panneau (13-2) au niveau des évidements (14), et chaque canal (K) se trouvant entre des évidements successifs (14), la largeur de chaque canal (K) étant supérieure à la hauteur de celui-ci, la largeur de chaque évidement (14) étant inférieure à la largeur de chacun des canaux (K), et les canaux (K) s'étendant sensiblement parallèlement les uns aux autres, et les canaux (K) étant mutuellement reliés dans une configuration de harpe.

2. Élément de couverture de toit selon la revendication 1, **caractérisé en ce que** la face supérieure de la couche de couverture (2) prend la forme des éléments de couverture de toit à remplacer (12).

3. Élément de couverture de toit selon l'une quelconque des revendications précédentes, **caractérisé en ce que** l'espace entre la couche de couverture (2) et la première couche photovoltaïque (4) est étanche à l'air et rempli d'un gaz sec.

4. Élément de couverture de toit selon l'une quelconque des revendications précédentes, **caractérisé en ce que** le panneau solaire (1) est pourvu d'une deuxième couche photovoltaïque qui est configurée pour convertir la lumière infrarouge en électricité, et qui est disposée sur la première couche photovoltaïque (4).

5. Élément de couverture de toit selon l'une quelconque des revendications précédentes, **caractérisé en ce qu'**un ou plusieurs miroirs (17) sont placés entre la couche de couverture (2) et la première couche photovoltaïque (4) et à proximité des bords de la première couche photovoltaïque (4) de sorte que la lumière incidente se réfléchit sur la première couche photovoltaïque (4).
